# EUROPEAN PATENT APPLICATION

(11) **EP 1 207 413 A1**
(43) Date of publication of application: **22.05.2002**
(21) Application number: 01126504.8
(22) Date of filing: 12.11.2001
(51) Int. Cl.: G02B 6/44

(54) **Branching method for an optical fiber cable**

(30) Priority: 16.11.2000 JP 2000350141
(71) Applicant: Asahi Glass Co., Ltd., Tokyo 100-8405 (JP)
(72) Inventor: Takano, Yoshinobu, Kanagawa-ku, Yokohama-shi, Kanagawa (JP); Watanabe, Yuji, Kanagawa-ku, Yokohama-shi, Kanagawa (JP)
(74) Representative: Müller-Boré & Partner Patentanwälte

(57) **Abstract**

A branching method for an optical fiber cable (1) containing a plurality of plastic optical fibers (2), which comprises cutting a desired optical fiber (2) in the cable (1) without cutting the cable (1) in its entirety, at a non-terminal position of the cable, to form a terminal of the fiber.

## Description

The present invention relates to a branching method for an optical fiber cable.

In a case where optical fibers are used for communication by many users within e.g. a building, a multicore fiber cable having a plurality of optical fibers accommodated in a single optical fiber cable, is employed. The operation of installing an optical fiber cable is simplified by branching a necessary number of optical fibers (for example, for every floor) at an intermediate position of such a multicore fiber cable.

A typical structure of such an optical fiber cable comprises a spacer provided with a plurality of helical slots (grooves), optical fibers received in the slots and a covering layer.

Heretofore, optical fibers employed for an optical fiber cable used to be mainly glass optical fibers. However, glass optical fibers are hard, and it used to be difficult to cut desired optical fibers as they are accommodated in slots. Further, with glass optical fibers, the allowable extensional strain is small, and it used to be difficult to withdraw desired optical fibers from slots. Here, the allowable extensional strain is the maximum extensional strain where optical fibers receive substantially no non-recoverable loss due to e.g. breakage, among extensional strains accumulated in the fibers when the optical fibers are extended in the longitudinal direction of the fibers. The allowable extensional strain of glass optical fibers is usually from 0.2 to 0.3%.

In order to solve such problems involved in branching, many proposals have been made.

In a case where a branch portion is predetermined, a method of branching by means of an optical closure (a connecting box or a branching box) has been proposed, as disclosed in e.g. JP-A-2000-89039. However, in this case, it is necessary to cut a tension member (tension material) at every branch portion and to treat all optical fibers in the optical fiber cable. Such a method is cumbersome and has a drawback that optical fibers are likely to be damaged. Further, as the branch portion is predetermined, branching can be carried out only at the time of installation of the optical fiber cable, and such a method can not cope with a situation where a branch portion is to be added after the installation.

With respect to a post branching method i.e. a method of branching an optical fiber cable at an optional non-terminal position of an existing optical fiber cable, JP-A-11-295574 proposes a method wherein an excess length is secured at the time of installing the optical fiber cable, and JP-A-11-211949 discloses a method of using a SZ type slot (a special slot wherein the helical direction periodically reverses). However, in the former proposal, it is necessary to secure an excess length to some extent at the time of installing the optical fiber cable, and a step of withdrawing the optical fiber cable is required, such being problematic from the viewpoint of the operation efficiency, although it is not necessary to cut a tension member. The latter proposal has a problem such that the SZ type slot adds to the cost for the production of the optical fiber cable as compared with one directional helical slot, or it is necessary to remove the covering layer over a long range in order to take out the optical fiber from the slot, and it is necessary to take a trouble of protecting the portion after removal of the covering layer.

The present invention is to solve the above problems which could not be easily solved by glass optical fibers, by using plastic optical fibers which are flexible and useful for middle distance communication. Namely, the present invention provides a simple branching method whereby a desired optical fiber in an optical fiber cable can easily be cut. More particularly, it provides a simple branching method by using plastic optical fibers which have a large allowable extensional strain and which can easily be cut, as the optical fibers.

The present invention provides the following branching method:
(1) A branching method for an optical fiber cable containing a plurality of plastic optical fibers, which comprises cutting a desired optical fiber in the cable without cutting the cable in its entirety, at a non-terminal position of the cable, to form a terminal of the fiber. By using plastic optical fibers as the optical fibers, the degree of freedom in the branching method increases, and the branching operation can be simplified. Further, with the branching at a non-terminal position, as compared with a case where conventional glass optical fibers are used, it is not necessary to substantially deform the optical fiber cable to be branched, whereby the branching operation can be simplified. Namely, it is not necessary to cut the cable in its entirety, whereby the branching operation can be simplified.
(2) The branching method as defined in (1), wherein the branching method is a post branching method, i.e. a method of forming the terminal of the optical fiber at an optional non-terminal position of an existing optical fiber cable. With the branching method of the present invention, branching can be carried out at an optional position of an existing optical fiber cable without necessity to predetermine the branch position, and thus it is useful as a post branching method.
(3) The branching method as defined in (1) or (2), wherein the terminal of the optical fiber is formed while the cable is in an extended state. According to this method, the branching operation can be carried out while the cable is in an extended state without substantially deforming the optical fiber cable.
(4) The branching method as defined in (1), (2) or (3), wherein the desired optical fiber is withdrawn from the cable and then cut. By using extensible (the allowable extensional strain being large) plastic fibers as the optical fibers, the optical fibers can be withdrawn from the optical fiber cable without requiring any special technique, and the plastic optical fiber can be cut by a simple cutting means such as scissors.
(5) The branching method as defined in (1), (2) or (3), wherein the desired optical fiber is cut and then withdrawn from the cable. This is similar to (4), but the plastic optical fiber can easily be cut and thus can be cut as accommodated in the optical fiber cable, and the cut fiber can be withdrawn for branching.
(6) The branching method as defined in any one of (1) to (5), wherein the cable is provided with a slotted spacer, and the desired optical fiber is cut without cutting the spacer, to form the terminal of the optical fiber. The optical fiber cable is provided with a slotted spacer, whereby such a branching method can be applied to a multicore cable of e.g. 64 cores or 128 cores. Further, this spacer is not cut, whereby cutting treatment and post treatment after cutting are omitted, and the process can be substantially shortened. Further, no spacer is cut, there will be no adverse effect to other optical fibers accommodated in the spacer. Accordingly, damage to other optical fibers can be prevented.
(7) The branching method as defined in any one of (1) to (6), wherein the cable is provided with a tension member, and the desired optical fiber is cut without cutting the tension member, to form the terminal of the optical fiber. The tension member is not cut, whereby cutting treatment and post treatment after the cutting, are omitted, and the cable is not required to be substantially deformed, and the process can be substantially shortened.
(8) The branching method as defined in (7), wherein without substantially elastically deforming the tension member, the desired optical fiber is cut to form the terminal of the optical fiber. According to this method, the branching operation can be carried out without substantially deforming the cable, like in (7).
   Further, the present invention provides the following plastic optical fiber cable.
(9) An optical fiber cable containing a plurality of plastic optical fibers, wherein a desired optical fiber in the cable is cut without cutting the cable in its entirety, at a non-terminal position of the cable, to form a terminal of the fiber. By the above branching method, a plastic optical fiber cable branched at a non-terminal position can easily be obtained. This is due to the fact that plastic optical fibers are flexible, have a large allowable extensional strain and can easily be cut. With this branched optical fiber cable, the degree of freedom in providing a branch increases, and a wiring design within a building or the like, can easily be made.
   Further, the present invention provides the following optical closure.
(10) An optical closure for connecting a terminal of a branch side optical fiber branched from a branch side optical fiber cable with a terminal of a connect side optical fiber withdrawn from a connect side optical fiber cable; said branch side optical fiber cable being an optical fiber cable containing a plurality of plastic optical fibers; the branched portion of the branch side optical fiber cable being one formed by cutting a desired optical fiber in the cable without cutting the cable in its entirety, to form a terminal of the optical fiber; said branch side optical fiber being the optical fiber having the terminal formed by said cutting; and said optical closure being located at said branched portion of the branch side optical fiber cable and having a branch side optical fiber cable-fixing member to hold the branch side optical fiber cable, a connect side optical fiber cable-fixing member to hold the connect side optical fiber cable, and an optical fiber-connecting member to connect the terminal of the branch side optical fiber with the terminal of the connect side optical fiber. With the optical closure of the present invention, as compared with the case of the conventional glass optical fibers, the optical closure can be made substantially small-sized.

### BRIEF DESCRIPTION OF THE DRAWINGS

Fig. 1 is a front view illustrating an example of the branching method employing a splice.
Fig. 2 is a front view illustrating an example in the middle of branching a plastic optical fiber cable (the state in which a plastic optical fiber is withdrawn after removal of a covering layer).
Fig. 3 is a cross-sectional view taken along line X-X in Fig. 2.

Now, the present invention will be described in further detail with reference to the preferred embodiments.

The optical fibers of the present invention are entirely plastic optical fibers (hereinafter referred to as plastic optical fibers), and they are used mainly for communication. As the plastic fibers for communication, multimode graded index type plastic optical fibers (GI-POF) are preferred in that the communication speed can be made high. As GI-POF, those made of poly(methyl methacrylate) or made of entirely fluororesin, are known. However, those made of entirely fluororesin are preferred in that the communication distance can be made as long as several hundreds meters, and a wide range of light source ranging from visible light to near infrared light, can be used. As examples of such optical fibers made of entirely fluororesin, those disclosed in JP-A-8-5848 may be mentioned. The optical fibers being made of plastic, means that the allowable extensional strain is large, and the optical fibers can be handled in an extended state without giving any loss to their performance. The optical fibers can be handled in an extended state, whereby a desired optical fiber accommodated in a slot of an optical fiber cable installed and fixed can be withdrawn to a position for cutting (usually from about 1 to 2 cm from the surface of the optical fiber cable) and then cut.

The allowable extensional strain of the plastic fibers to be used in the present invention is preferably at least 0.2%, more preferably at least 1%, particularly preferably at least 2%. The upper limit is not particularly limited, but is usually 5%. The allowable extensional strain of the optical fibers being at least 0.2%, means that the optical fibers can thereby be handled in an extended state. For example, if 0.2% extension is allowable with a cable of 100 m, the optical fibers can be extended for 20 cm.

Further, the plastic optical fibers are soft as compared with glass optical fibers and can easily be cut. Accordingly, by inserting a cutting blade into the slot, a plastic optical fiber can be cut as accommodated in the slot, and thereafter, it can be withdrawn from the optical fiber cable.

The structure of the optical fiber cable to be used in the present invention may be any one of known structures. The optical fiber cable of the present invention is preferably provided with a slotted spacer, and its typical structure comprises a slotted spacer provided with a plurality of helical slots, an optical fiber unit accommodated in each slot, and a covering layer. Here, the optical fiber unit may, for example, be a single optical fiber, an optical fiber bundle having a plurality of optical fibers bundled, an optical fiber ribbon having a plurality of optical fibers laid and molded, or one having a plurality of optical fiber ribbons bundled. Further, the spacer is usually provided with slots on its outer circumference and has a tension member at its center portion.

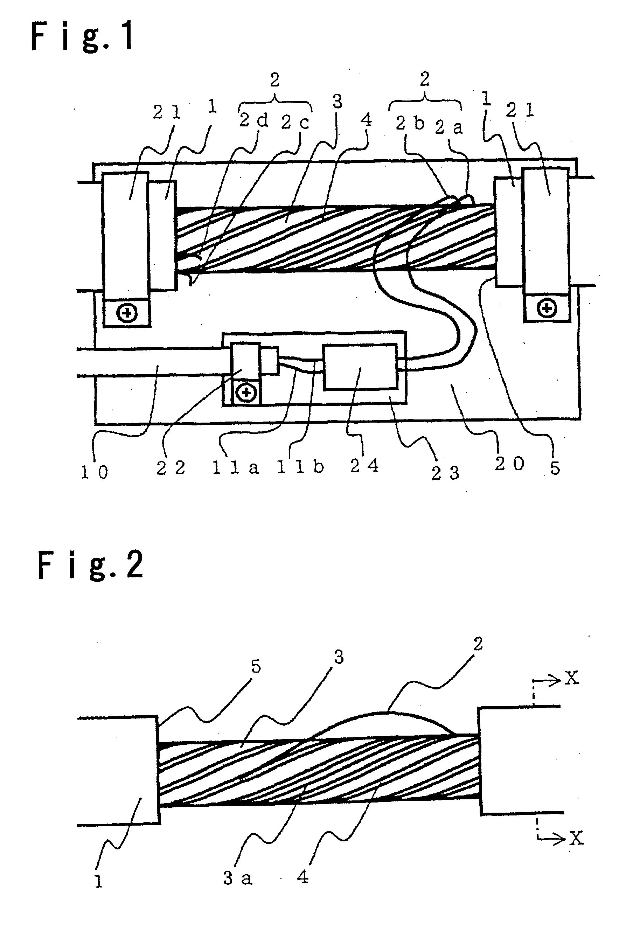

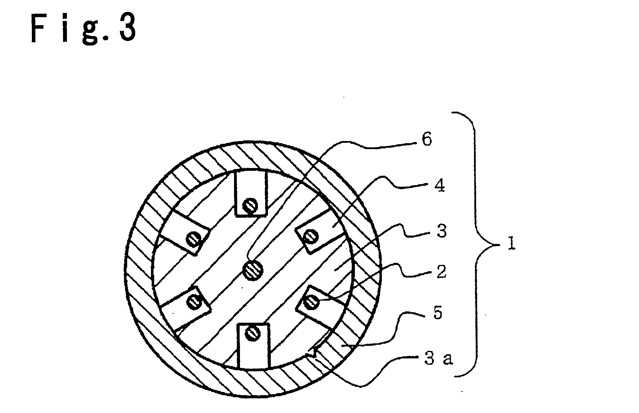

Fig. 3 illustrates a structure of a typical optical fiber cable. Fig. 3 is a cross-sectional view of an optical fiber cable 1 along line X-X in Fig. 2. In this embodiment, a slotted spacer 3 is provided with six slots 4 helical in one direction on its outer circumference and is provided with a single tension member 6 at the center. In this embodiment, in each slot, a single plastic optical fiber 2 is accommodated. Thus, the optical fiber cable 1 is a six core optical fiber cable. The spacer 3 is surrounded by a covering layer 5, which protects the entire optical fiber cable.

The slotted spacer is provided with a plurality of slots, and the number of slots are usually from 4 to 12. The number of plastic optical fibers accommodated in one slot is one or more, usually from one to 8. Thus, the optical fiber cable usually has from 4 to 96 cores.

The branching method for an optical fiber cable of the present invention is a branching method which comprises cutting a desired optical fiber in the cable without cutting the cable in its entirety, at a non-terminal position of the cable, to form a terminal of the fiber. Namely, this method is excellent in that it is thereby unnecessary to preliminarily determine the branch position at the time of installing the optical fiber cable. The branching method of the present invention is useful as a post branching method, i.e. a method of forming the terminal of the optical fiber at an optional non-terminal position of an existing optical fiber cable. It is also useful as a branching method in which an optical fiber cable is branched while determining the branch position at the time of installation.

The branching method for an optical fiber cable of the present invention comprises a cutting step (A) of cutting a desired plastic optical fiber in an optical fiber cable and a connecting step (B) of connecting the cut optical fiber end to another optical fiber to be connected.

A method for cutting a plastic optical fiber in the cutting step (A) may, for example, be such that the covering layer of the optical fiber cable is peeled and removed, and then a plastic optical fiber is withdrawn from a slot of the slotted spacer and then cut, or such a cutting blade is inserted into such a slot to cut the plastic optical fiber as it is accommodated in the slot. Further, even in the case of an optical fiber cable which is not provided with a slotted spacer (such as an optical fiber cable wherein optical fiber code is directly wound on a tension member), the plastic optical fiber can be withdrawn from the cable and then cut.

The range of removal of the covering layer required for cutting a plastic optical fiber, may be a range wherein a plastic optical fiber having a length sufficient for the operation of the connecting step (B) can be obtained. Specifically, it is preferably within a range of from about 10 to 40 cm, more preferably within a range of from about 20 to 30 cm. If the removal length is shorter than this, there will be a problem such that the working efficiency in the connecting step (B) tends to deteriorate. On the other hand, if the removal range of the covering layer is too much, it will be necessary to take a trouble of protecting the portion where the covering layer was removed, after completion of the branching operation.

As the optical fiber-connecting member in the connecting step (B), a splice or a connector may be mentioned. Namely, the connecting method for an optical fiber may be a splice method or a connector method. Among them, the connection by means of a splice is preferred, since it is thereby possible to control the connection loss at a low level. Further, as the connector, a conventional connector such as SC connector, FC connector, LC connector, MT connector, MT-RJ connector or MU connector, may be employed. Among them, MT connector is preferred, since multicores can be connected in a space-saving manner. Further, it is preferred to use a refractive index-adjusting agent at the portion where the fibers to be connected in the connecting step (B), are bonded, since it is thereby possible to suppress the connection loss to a low level.

Further, in the connecting step (B), it is preferred to employ an optical closure for the protection of the portion where the covering layer of the optical fiber cable is removed and the portion where the optical fibers are connected to each other (a splice, a connector). Further, use of an optical closure is preferred also from the viewpoint that the branched optical fiber cable and another optical fiber cable to be connected, can simultaneously be fixed.

For connection of optical fibers, usually, plastic optical fibers having the same specifications, are connected. However, by using a special connector, a plastic optical fiber may be connected to an optical fiber having a different specification such as a glass optical fiber.

In the branching method of the present invention, for branching at one position, a single plastic optical fiber or a plurality of plastic optical fibers, may be withdrawn to form a branch of the optical fiber cable.

By the branching method of the present invention, the optical fiber cable can be branched while the optical fiber cable is in an extended state. This branching method is preferred also from the viewpoint that it does not require a step of withdrawing the optical fiber cable for branching. However, it is also possible to carry out branching at a portion fixed in a bent state at the time of installation. Namely, by the branching method of the present invention, when the fiber cable is provided with a tension member, the fiber cable can be branched without substantially elastically deforming the tension member.

As the above optical closure, it is preferred to employ the optical closure of the present invention. The optical closure of the present invention is an optical closure for connecting a terminal of a branch side optical fiber branched from a branch side optical fiber cable with a terminal of a connect side optical fiber withdrawn from a connect side optical fiber cable; said branch side optical fiber cable being an optical fiber cable containing a plurality of plastic optical fibers; the branched portion of the branch side optical fiber cable being one formed by cutting a desired optical fiber in the cable without cutting the cable in its entirety, to form a terminal of the optical fiber; said branch side optical fiber being the optical fiber having the terminal formed by said cutting; and said optical closure being located at said branched portion of the branch side optical fiber cable and having a branch side optical fiber cable-fixing member to hold the branch side optical fiber cable, a connect side optical fiber cable-fixing member to hold the connect side optical fiber cable, and an optical fiber-connecting member to connect the terminal of the branch side optical fiber with the terminal of the connect side optical fiber. Further, it is preferred that the branch side optical fiber cable is provided with a tension member, and the branch side optical fiber cable-fixing member holds the branch side optical fiber cable in an extended state without substantially elastically deforming the tension member.

The optical closure of the present invention is useful for the branching method for the optical fiber cable as described above. Namely, the optical fibers for the optical fiber cable to be branched, are made of plastic, whereby the allowable extensional strain is large, and the optical fibers can be handled in an extended state. That is, the optical fiber cable can be branched without substantially deforming it, except that the covering is removed to take out an optical fiber. Thus, the optical closure may simply have a simple fixing member to hold the optical fiber cable and an optical fiber-connecting member, and the entire structure can be small-sized. As compared with a case of glass optical fibers whereby, if a tension member is cut, a mechanism to hold the cut tension member, is required, the fixing-member of the optical fiber cable can be simplified. Further, the optical closure has a function to protect the portion where the covering of the optical fiber cable to be branched, was removed. According to the branching method for an optical fiber cable of the present invention, the removal of the covering is limited to a short region as compared with the case of glass optical fibers, whereby the optical closure of the present invention can be small-sized. Especially when an optical fiber is taken out while the optical fiber cable is elastically substantially deformed, as compared with a case where the covering in a long region of the elastically deformed portion has to be removed, the region to be protected is short, and therefore, the optical closure of the present invention can be small-sized.

A specific example of the branching method for an optical fiber cable will be described with reference to the drawings. Fig. 2 illustrates a state in the middle of branching (the state where one plastic optical fiber 2 was withdrawn after removal of the covering layer), and Fig. 3 shows a cross-sectional view along line X-X in Fig. 2. The optical fiber cable 1 in this example is a six core plastic optical fiber cable, and in each slot 4 of a slotted spacer 3, one plastic optical fiber 2 is accommodated. The diameter of the optical fiber cable 1 is 11.8 mm; the thickness of the covering layer 5 is 1.7 mm; the diameter of the slotted spacer 3 is 8.4 mm; the diameter of the tension member 6 is 1.4 mm; the width of each slot 4 is 1.3 mm; the depth of each slot is 2.0 mm; and the diameter of the plastic optical fiber is 0.5 mm. Here, the covering layer 5 is one having a nonwoven fabric of polyethylene wound on the slots 4 and having a covering of a polyvinyl chloride resin applied in a thickness of 1 mm. Further, the tension member 6 is made of steel. The plastic optical fiber 2 is one having an entirely fluororesin optical fiber having a diameter of 0.25 mm, coated with poly(methyl methacrylate).

Firstly, an example of the cutting step (A) will be described. The covering layer 5 is peeled by means of a cable stripper, a knife or the like and removed over about 20 cm. Then, a spatula or the like is inserted into a slot 4, and the accommodated plastic optical fiber 2 is withdrawn from the slot 4. The desired plastic optical fiber 2 to be branched is identified, for example, by providing a protrusion 3a (see Fig. 3), a groove or the like to the slotted spacer, coloring a portion of the slotted spacer or applying coloring or printing to the fiber. The withdrawn plastic optical fiber 2 is cut by means of a cutter knife, a razor, a scissor, a nipper or the like.

Another example of the cutting step (A) will be described. The covering layer 5 is removed in the same manner as described above. Then, a small-sized chisel blade corresponding to the width of a slot 4 is inserted into the slot 4 to cut the plastic optical fiber 2. As such a small-sized chisel blade, a minus-type small screw driver may also be used.

Now, an example of the connecting step (B) will be described. In this example, from a branch side optical fiber cable 1, two plastic optical fibers 2a and 2b are withdrawn and cut, and they are connected to connect side plastic optical fibers 11a and 11b of a duplex connect side optical fiber cable 10. Remains of the cut two plastic optical fibers 2a and 2b are 2c and 2d.

In this example, an optical closure 20 was employed, and a splice method is employed as the connecting member for the plastic optical fibers. The optical closure 20 is provided with a cover (not shown ), two branch side optical fiber-fixing members 21 as fixing members for the branch side optical fiber cable and one splice housing 23. In the splice housing 23 secured to the optical closure 20, a connect side optical fiber cable-fixing member 22 as a fixing member for the connect side optical fiber cable, a splice housing cover (not shown) and one mechanical splice 24, are provided.

The branch side optical fiber cable 1 is secured to the optical closure 20 by means of an optical fiber cable-fixing member 21. The connect side optical fiber cable 10 has the covering at the terminal removed to expose connect side plastic optical fibers 11a and 11b. The cut end surfaces (the end surfaces to be connected) of the branch side plastic optical fibers 2a and 2b and connect side plastic optical fibers 11a and 11b, to be connected, are processed to have optical flat surfaces. Such a processing method may be a method of employing a cutting equipment specific for plastic optical fibers, or a method of cutting by means of a cutter knife or the like, followed by polishing by means of a polishing sheet.

The connect side optical fiber cable 10 is secured to the optical closure 20 by means of a connect side optical fiber cable-fixing member 22, and plastic optical fibers 2a and 11a, and 2b and 11b, having the end surfaces processed, were connected, respectively, by means of a mechanical splice 24. At the time of connection, a refractive index-adjusting agent, may be employed. After completion of the connection of the plastic optical fibers 2a and 2b with the connect side plastic optical fibers 11a and 11b, a splice housing cover is set on the splice housing 23, and if necessary, a protective covering is set at the portion where the covering layer 5 of the optical fiber cable 1 was removed. Finally, a cover is put on the optical closure 20 to complete the branching operation.

In the present invention, an optical fiber cable can be easily branched after installation by employing flexible plastic optical fibers. Especially, an optical fiber cable equipped with a spacer having one directional helical slots, can easily be branched. Further, even in a case of an optical fiber cable equipped with a spacer provided with SZ type slots, branching can be accomplished by removing the covering layer in a short range as compared with the conventional method. Accordingly, if the branching method for the optical fiber cable of the present invention is employed, an optical fiber cable can be branched at an optional position even after the installation. Further, the branch portion comprising a branch side optical fiber cable having a covering removed, components such as a splice and a connector for connection of optical fibers to each other, a connect side optical fiber cable having a covering removed for connection and an optical closure, can be small-sized. For the connection of the branched plastic optical fibers, a conventional method such as a splice method or a method of employing a connector, can easily be employed, and a plastic optical fiber cable branched at a non-terminal position, which is simple and has a low loss, can be obtained. Further, the optical closure of the present invention is small in size as compared with the conventional optical closure.

## Claims

1. A branching method for an optical fiber cable containing a plurality of plastic optical fibers, which comprises cutting a desired optical fiber in the cable without cutting the cable in its entirety, at a non-terminal position of the cable, to form a terminal of the fiber.

2. The branching method according to Claim 1, wherein the branching method is a post branching method, i.e. a method of forming the terminal of the optical fiber at an optional non-terminal position of an existing optical fiber cable.

3. The branching method according to Claim 1 or 2, wherein the terminal of the optical fiber is formed while the cable is in an extended state.

4. The branching method according to Claim 1, 2 or 3, wherein the desired optical fiber is withdrawn from the cable and then cut.

5. The branching method according to Claim 1, 2 or 3, wherein the desired optical fiber is cut and then withdrawn from the cable.

6. The branching method according to any one of Claims 1 to 5, wherein the cable is provided with a slotted spacer, and the desired optical fiber is cut without cutting the spacer, to form the terminal of the optical fiber.

7. The branching method according to any one of Claims 1 to 6, wherein the cable is provided with a tension member, and the desired optical fiber is cut without cutting the tension member, to form the terminal of the optical fiber.

8. The branching method according to Claim 7, wherein without substantially elastically deforming the tension member, the desired optical fiber is cut to form the terminal of the optical fiber.

9. An optical fiber cable containing a plurality of plastic optical fibers, wherein a desired optical fiber in the cable is cut without cutting the cable in its entirety, at a non-terminal position of the cable, to form a terminal of the fiber.

10. An optical closure for connecting a terminal of a branch side optical fiber branched from a branch side optical fiber cable with a terminal of a connect side optical fiber withdrawn from a connect side optical fiber cable; said branch side optical fiber cable being an optical fiber cable containing a plurality of plastic optical fibers; the branched portion of the branch side optical fiber cable being one formed by cutting a desired optical fiber in the cable without cutting the cable in its entirety, to form a terminal of the optical fiber; said branch side optical fiber being the optical fiber having the terminal formed by said cutting; and said optical closure being located at said branched portion of the branch side optical fiber cable and having a branch side optical fiber cable-fixing member to hold the branch side optical fiber cable, a connect side optical fiber cable-fixing member to hold the connect side optical fiber cable, and an optical fiber-connecting member to connect the terminal of the branch side optical fiber with the terminal of the connect side optical fiber.
